# FASCICULE DE BREVET EUROPEEN

(11) **EP 3 918 446 B1**
(45) Date de publication et mention de la délivrance du brevet: **10.09.2025**
(21) Numéro de dépôt: 20701640.3
(22) Date de dépôt: 30.01.2020
(51) Int. Cl.: G06F 3/01, G06F 3/041, G06F 3/04886, B60K 35/10, B60K 35/25, B60K 35/26, B60K 35/21, B60K 35/22

(54) **PROCÉDÉ DE GÉNÉRATION D'UN RETOUR SENSITIF POUR UNE INTERFACE ET INTERFACE ASSOCIÉE**
VERFAHREN ZUR ERZEUGUNG EINER HAPTISCHEN RÜCKKOPPLUNG FÜR EINE SCHNITTSTELLE UND ZUGEHÖRIGE SCHNITTSTELLE
METHOD FOR GENERATING A HAPTIC FEEDBACK FOR AN INTERFACE, AND ASSOCIATED INTERFACE

(30) Priorité: 31.01.2019 FR 1900953
(43) Date de publication de la demande: 08.12.2021
(73) Titulaire: Valeo Comfort and Driving Assistance, 94000 Créteil (FR)
(72) Inventeur: VANHELLE, Stephane, 94046 Créteil CEDEX (FR); ADRIANO, Pedro, 94046 Créteil CEDEX (FR)
(74) Mandataire: Delplanque, Arnaud
(86) Numéro de dépôt international: PCT/EP2020/052246
(87) Numéro de publication internationale: WO 2020/157175

(56) Documents cités:
- WO-A1-2018/219832
- SANG-YOUN KIM ET AL: "A Hybrid Approach for a Real-time Haptic and Graphic Simulator in Virtual Environment", ROBOT AND HUMAN INTERACTIVE COMMUNICATION, 2007. RO-MAN 2007. THE 16TH IEEE INTERNATIONAL SYMPOSIUM ON, IEEE, PI, 26 August 2007 (2007-08-26), pages 316 - 319, XP031224934, ISBN: 978-1-4244-1634-9
- ACM, 2 PENN PLAZA, SUITE 701 - NEW YORK USA, 18 October 2006 (2006-10-18), XP040048815

## Description

La présente invention concerne un procédé de génération d'un retour sensitif pour une interface de véhicule automobile. La présente invention concerne également une interface de véhicule automobile configurée pour la mise en œuvre dudit procédé.

WO 2018/219832 A1 décrit un procédé de génération d'un retour sensitif pour une interface de véhicule automobile. Pour simplifier les tableaux de bord des véhicules automobiles, gérer différentes configurations d'interfaces ,et améliorer leur esthétisme, on intègre de plus en plus des écrans tactiles à l'intérieur de l'habitacle.

A la base, ces écrans sont plats, mais plus récemment ont été développé des écrans tactiles avec un certain galbe s'intégrant harmonieusement dans la planche de bord d'un véhicule automobile.

Ces écrans permettent la commande d'un grand nombre de fonctions comme par exemple des fonctions de climatisation, audio, de téléphonie, de navigation, d'aides à la conduite, pour n'en citer que quelques-unes et contribuent à l'esthétisme de l'intérieur de l'habitacle. Pour les constructeurs automobiles, elles permettent aussi de donner une « signature » de leur marque, aussi grâce aux interfaces graphiques des écrans.

Un écran tactile permet donc d'augmenter le nombre de fonctions pouvant être commandées par les utilisateurs avec l'avantage d'être programmables et reconfigurables et pouvant être exposées de façon temporaire ou permanente selon le contexte ou la fonction activée. L'écran inclut ainsi une possibilité de multifonctionnalité, tout en dématérialisant les boutons et en étant personnalisable. Ces écrans tactiles dont le coût tend à diminuer permettent donc de s'adapter facilement à différents modèles et à des gammes de véhicule différentes.

De plus en plus, les écrans tactiles sont équipés d'un retour sensitif par exemple haptique et/ou sonore. Le retour sensitif permet par exemple d'assurer à l'utilisateur que sa commande a bien été prise en compte, ce qui permet d'éviter l'apparition de situations dangereuses en cours de conduite.

Dans un second temps, par l'intégration d'un écran tactile, on souhaite également simuler pour l'utilisateur un environnement qu'il connaît. En effet, les écrans permettent par exemple d'afficher des images pouvant comporter des objets, comme par exemple des reliefs ou des boutons. L'utilisateur a, par le jeu d'effets d'éclairage et d'ombre, une perception visuelle en relief de l'objet affiché. Certaines autres images ou zones de l'image affichent une surface présentant une certaine texture de surface. Le visuel rendu est, en fonction de la qualité d'affichage de l'écran, de plus en plus proche de la perception réelle de l'objet affiché par un utilisateur.

Des développements récents proposent d'associer de plus un retour sensitif au relief de l'image affichée sur l'écran tactile pour un rendu très similaire à celui d'un relief en 3D d'un objet réel. Dans ce cas, le retour haptique a non seulement pour fonction de confirmer ou valider un choix de l'utilisateur, mais aussi, à partir d'une interface généralement lisse, de lui donner une perception de surface en accord avec une image ou un objet affiché.

Un motif haptique est par exemple associé au moins dans certaines zones de l'image pour simuler à l'utilisateur un ressenti proche du motif visuel affiché.

On connait par exemple un procédé de simulation de texture qui associe un motif haptique spécifique à différentes zones de l'écran.

Par exemple, pour simuler une texture de stries verticales, des zones reprenant les formes des stries sont définies sur l'image pour chaque « nervure » ou « rainure » et un motif haptique différent est associé à chaque zone d'aspect différent.

En fonctionnement, lorsque le doigt de l'utilisateur se déplace horizontalement sur la surface lisse de l'écran tactile sur la succession de stries affichées par l'écran, il perçoit des motifs haptiques générés en alternance rappelant les stries verticales qu'il visualise simultanément sur l'écran. Le but est donc de mettre la perception haptique de l'utilisateur en accord avec l'image ou l'objet affiché sur l'écran.

Cette perception haptique de texture, également appelée « haptic texturing » en anglais, peut toutefois parfois manquer de réalisme.

C'est par exemple le cas lorsque l'utilisateur perçoit un décalage entre la localisation d'un ressenti haptique d'un relief sur l'écran et sa visualisation. Un tel décalage peut survenir par exemple lorsque l'utilisateur déplace rapidement son doigt sur l'écran.

Cela peut aussi être le cas lorsque l'utilisateur déplace son doigt dans des directions différentes et qu'il ne perçoit pas de modifications de texture selon le sens de déplacement du doigt alors qu'il visualise des textures asymétriques sur l'écran.

Ces imprécisions du ressenti haptique sont notamment dues au temps de calcul nécessaire pour le traitement des informations.

Pour améliorer cela, une solution consiste à réaliser des calculs de direction et de trajectoire permettant de prendre en compte notamment la vitesse de déplacement du doigt, la pression d'appui du doigt exercée sur l'écran ou le sens de déplacement du doigt pour la détermination de l'effet haptique à générer. Ces calculs tentent par exemple d'anticiper le mouvement du doigt sur l'écran pour mieux synchroniser la perception du retour haptique généré avec la texture affichée sur l'écran afin qu'elle soit la plus réaliste possible.

En reprenant l'exemple des stries verticales, on mesure par exemple le sens de déplacement du doigt pour adapter le motif haptique selon que l'utilisateur déplace son doigt horizontalement ou verticalement. Egalement, on mesure la vitesse de déplacement du doigt pour anticiper la trajectoire et adapter le motif du retour haptique généré à l'augmentation de vitesse de déplacement du doigt.

Toutefois, ces calculs nécessitent beaucoup de ressources informatiques.

En outre, on constate toujours des imperfections de perception du retour haptique.

Ces imperfections de perception sont principalement dues au temps de calcul notamment nécessaire pour mesurer la vitesse et le sens de déplacement du doigt de l'utilisateur sur l'écran tactile et pour calculer ensuite le retour haptique à générer qui correspond à ces données particulières.

Une autre imperfection vient de l'impossibilité de rendre compte avec le ressenti haptique de l'interaction par exemple du doigt comme élément de commande avec un relief déformable dans le monde réel. En effet, si on suppose dans le monde réel une surface 3D avec des petites nervures ou protubérances en matière élastique, en fonction du matériau, notamment son élasticité, et de la force d'appui appliquée sur un tel relief, la perception haptique par l'utilisateur en glissant son doigt sur ce relief est différente. En effet, plus la force d'appui est importante et plus la matière est élastique, plus l'utilisateur va « écraser » dans le mode réel les parties en relief et « gommer » en quelque sorte les aspérités de surface. En revanche par exemple pour un relief en « pierre » très rigide et ne présentant aucune élasticité, il n'y a pas cet effet de gommage ou d'écrasement.

Par ailleurs, les solutions connues sont des images statiques, c'est-à-dire que, certes l'image affichée permet à l'utilisateur de percevoir un certain relief, comme par exemple des rainures et des nervures et par des retours adaptés, l'utilisateur perçoit haptiquement ce relief, mais les solutions connues ne permettent pas une interaction évolutive entre le relief affiché d'une part et le retour haptique d'autre part. En conséquence, la représentation haptique et visuel peut paraître un peu rigide à l'utilisateur.

Un des buts de la présente invention est donc de remédier au moins partiellement à au moins un des inconvénients ci-dessus en proposant un procédé de génération d'un retour sensitif pour une interface de véhicule automobile plus performant, qui permette d'ajouter une composante relevant d'une interaction dynamique avec l'utilisateur.

Les revendications définissent l'invention.

D'autres caractéristiques et avantages de l'invention ressortiront de la description suivante, donnée à titre d'exemple et sans caractère limitatif, en regard des dessins annexés sur lesquels :
[Fig.1] montre une partie avant d'un habitacle de véhicule automobile,
[Fig.2] représente une vue schématique / synoptique de côté d'une interface,
[Fig.3] représente une vue en perspective d'un exemple d'une partie d'une surface texturée dans son espace virtuel sans contraintes,
[Fig.4] représente une vue en perspective d'un exemple d'une surface texturée selon la figure 3 dans son espace virtuel avec un appui d'un doigt,
[Fig.5] représente un exemple d'une interface avec une texturation dynamique évoluant dans le temps.

Sur ces figures, les éléments identiques portent les mêmes numéros de référence.

Le terme « texture procédurale » est un terme utilisé dans le graphisme numérique. Dans ce contexte, une textures procédurale est une texture qui est créée à partir d'une description mathématique (par exemple un algorithme) et non à partir de données enregistrées par exemple sous format bitmap en tant qu'image. Cette méthode a pour avantage que les textures peuvent être très précises et sont indépendantes de la résolution. Les textures procédurales peuvent être par exemple 2D ou 3D et sont souvent utilisées pour représenter des matériaux naturels comme du bois, du granite, du métal ou de la pierre.

L'aspect "naturel" de ces textures procédurales est généralement obtenu en utilisant du bruit fractal ou des fonctions de turbulence qui peuvent être utilisées comme une représentation d'un caractère aléatoire que l'on observe dans la nature.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation.

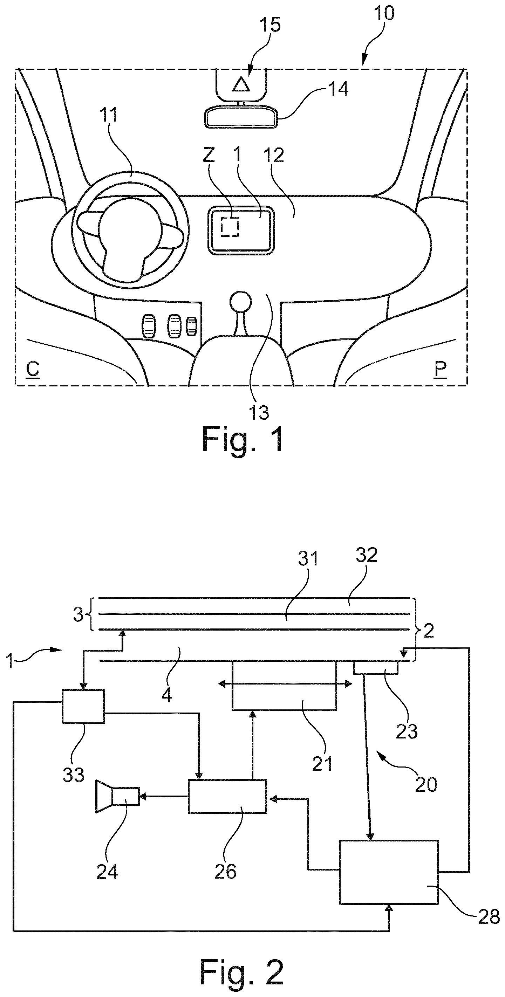

La figure 1 montre une vue schématique d'une partie avant d'un habitacle 10 de véhicule automobile vue depuis la partie arrière du véhicule.

L'habitacle 10 comprend notamment un siège conducteur C disposé derrière un volant 11 et une planche de bord 12, un siège passager P, un rétroviseur intérieur 14, un module de plafonnier 15, aussi appelé dôme, placé à proximité du rétroviseur intérieur 14 dans la partie centrale haute de la partie avant de l'habitacle 10 et une console centrale 13 située entre les deux sièges de la partie avant de l'habitacle 10, une interface 1 étant montée dans la planche de bord 12. Bien entendu, l'interface 1 peut être disposée à d'autres endroits dans l'habitacle 10 comme par exemple au niveau de la console centrale 13 ou tout autre endroit adapté.

Comme on peut le voir sur la figure 2 montrant une vue schématique de l'interface 1, l'interface 1 comporte un écran 4, une surface tactile 3 disposée au-dessus de l'écran 4 et un dispositif de retour sensitif 20. L'écran 4 et la surface tactile 3 forme un écran tactile 2.

Selon un exemple de réalisation, l'interface 1 permet par exemple la commande d'au moins une fonction d'un organe de véhicule automobile pour notamment commander des fonctions d'un système de climatisation, d'un système audio, d'un système de téléphonie ou encore d'un système de navigation. L'interface 1 peut aussi être utilisée pour par exemple commander des lumières intérieures, un verrouillage central, un toit ouvrant, les feux de détresse ou les lumières d'ambiance. Cette interface 1 peut également servir pour les commandes de lève-vitres, des commandes de positionnement des rétroviseurs extérieurs ou encore des commandes de déplacement de sièges motorisés. Il permet par exemple de sélectionner une adresse postale de destination ou un nom dans un répertoire, les réglages du système de climatisation, l'activation d'une fonction, la sélection d'une piste musicale parmi une liste.

La surface tactile 3 est par exemple une dalle tactile capacitive équipée de moyens pour déterminer ou mesurer une force d'appui appliquée sur la surface tactile 3.

La dalle tactile capacitive comprend ici au moins un capteur capacitif 31, une plaque frontale 32 agencée sur le capteur capacitif 31 et un contrôleur 33.

Le capteur capacitif 31 permet de détecter une variation de capacité au niveau de la surface de la plaque frontale 32. La dalle tactile capacitive peut détecter et déterminer les coordonnées spatiales en X et Y par exemple d'un élément de commande touchant la surface tactile 3.

L'élément de commande peut être un doigt ou tout autre moyen d'activation (par exemple un stylet) de l'utilisateur.

Le capteur capacitif 31 et la plaque frontale 32 sont au moins partiellement transparents. Le capteur capacitif 31 est par exemple formé d'un réseau d'électrodes s'étendant sur tout ou partie de la surface de la dalle. Les électrodes sont par exemple réalisées en ITO (oxyde indium - étain) qui permettent au capteur 31 d'être transparent.

La rigidité de la dalle tactile capacitive est obtenue au moyen de la plaque frontale 32 (ou plaque de contact) rigide, telle qu'une plaque de verre ou en polycarbonate. La plaque frontale 32 agencée sur le capteur capacitif 31 fait face à l'utilisateur une fois montée dans l'habitacle.

L'écran 4, tel qu'un écran TFT (« Thin-Film transistor » en anglais) ou un écran OLED ou un écran LCD est par exemple configuré pour afficher des informations ou images notamment associées à la manipulation de l'interface 1.

L'écran 4 est disposé sous le capteur capacitif 31. L'écran 4 est configuré pour afficher une image formée d'un nombre prédéterminé de pixels repérés chacun par une position dans l'image X, Y. Un pixel est un élément de surface de base (rectangulaire ou carré) d'une image numérique. Un pixel peut être formé de plusieurs sous-pixels : rouge, vert, bleu par exemple. Par exemple, un écran 4 de résolution 480*800 comporte 384000 pixels.

Les images affichées par l'écran 4 peuvent être de toute sorte en particulier des images synthétiques numériques, notamment en couleur.

La surface tactile 3 comprend au moins une zone active Z. La ou les zone(s) active(s) Z peut/peuvent s'étendre sur une partie ou l'ensemble de l'interface 1. Un contact de l'élément de commande dans la zone active Z peut permettre la commande du dispositif à retour sensitif 20.

Dans la zone active Z est par exemple affichée une image d'un objet texturé comme cela sera décrit plus en détail plus loin.

La surface tactile 3 est configurée pour localiser la position X, Y de l'élément de commande sur la surface tactile 3 ainsi que pour déterminer la force d'appui.

A cet effet, l'interface 1 comporte au moins un capteur d'appui 23 configuré pour mesurer un paramètre représentatif d'une force d'appui exercée sur la surface tactile 3 (figure 2).

Le capteur d'appui 23 est par exemple un capteur capacitif configuré pour mesurer une distance séparant la partie mobile de la partie fixe dans une direction perpendiculaire à la surface de l'écran tactile 2. Une variation de distance entre la partie mobile et la partie fixe est un paramètre représentatif d'un appui exercé sur l'écran tactile 2. Pour un exemple concret de réalisation, on peut par exemple se référer à l'interface décrite dans le document EP3340022 au nom de la Demanderesse.

La mesure de la force d'appui peut aussi être réalisée par d'autres moyens comme par exemple par mesure inductive ou par mesure ultrason ou par mesure de déformation au moyen de jauges de contrainte ou de capteurs FSR (pour « Force Sensing Resistor » en anglais). Pour mesurer la force d'appui, la surface tactile 3 est par exemple montée de façon flottante ou suspendue dans un cadre de support (non représenté) avec une jauge de contrainte intercalée entre le cadre de support et la surface tactile 3.

Le dispositif de retour sensitif 20 est configuré pour générer un retour sensitif, par exemple haptique et/ou sonore, lors d'une réception d'un signal de commande.

Pour ce faire, le dispositif de retour sensitif 20 comporte un module à retour haptique 21 et/ou un haut-parleur à retour sonore 24.

Un tel signal de commande pour un retour sensitif comprend par exemple un signal de commande du module à retour haptique 21 et/ou un signal de commande du haut-parleur à retour sonore 24 et/ou une absence de retour sensitif.

Le retour sonore du haut-parleur à retour sonore 24 peut présenter différents motifs et/ou fréquences et/ou amplitudes et/ou durées.

On désigne par « haptique », un retour tactile avec contact physique avec l'écran tactile 2.

Le retour haptique peut être réalisé en faisant par exemple vibrer l'écran tactile 2, ceci aussi bien dans une direction parallèle à un plan défini par l'écran 4 ou une direction perpendiculaire à ce plan. Le retour haptique est alors un retour par le toucher. Ainsi, le retour haptique est un signal vibratoire ou vibrotactile.

Le signal de commande du module à retour haptique H peut présenter différents motifs et/ou fréquences et/ou déphasages et/ou amplitudes et/ou durées, généralement comprises entre 20 et 30msec. Le motif (ou allure ou forme) présente par exemple une forme dite simple : linéaire, carré, demi-sinus, triangle, etc ou une forme dite complexe comportant une combinaison de formes simples ou une courbe. Le motif peut aussi être symétrique ou asymétrique en fonction du temps selon l'effet que l'on souhaite simuler. Un motif est symétrique en fonction du temps si la durée de déplacement dans un sens de déplacement est égale à celle dans le sens inverse. Un motif est asymétrique en fonction du temps si la durée dans un sens de déplacement est plus longue ou plus courte à celle dans le sens inverse.

Pour cela, le module à retour haptique comporte au moins un actionneur vibratoire 21 relié à l'écran tactile 2.

L'actionneur vibratoire 21 est par exemple de type ERM (pour « Eccentric Rotating-Mass » en anglais) également appelé « moteur vibrant » ou moteur à masselotte. Selon un autre exemple, l'actionneur vibratoire 21 est de type électromagnétique (solénoïde). Il peut reposer aussi par exemple sur une technologie similaire à celle du Haut-Parleur (en anglais : « Voice-Coil »). L'actionneur vibratoire 21 est par exemple un LRA (pour « Linear Resonant Actuator » en anglais), également appelé « moteur linéaire ». Selon un autre exemple, l'actionneur vibratoire 21 est de type piézoélectrique.

Le retour haptique est un signal vibratoire tel qu'une vibration produite par un signal de commande sinusoïdal ou par un signal de commande comportant un ou une succession de pulses, envoyé à l'actionneur vibratoire 21. La vibration est par exemple dirigée dans le plan de l'écran tactile 2 ou orthogonalement au plan ou encore dirigée selon une combinaison de ces deux directions.

L'écran tactile 2 et l'actionneur vibratoire 21 sont par exemple des éléments d'une partie mobile de l'interface 1 qui est reliée par au moins un élément amortisseur à une partie fixe destinée à être fixée au véhicule automobile.

Le dispositif de retour sensitif 20 peut comporter en outre une unité de traitement 26 ayant un ou plusieurs microcontrôleurs, ayant des mémoires et programmes adaptés notamment pour mettre en œuvre le procédé de génération d'un retour sensitif de l'interface, pour modifier l'affichage de l'écran 4, pour traiter les informations fournies par la surface tactile 3. C'est par exemple l'ordinateur de bord du véhicule automobile.

L'interface 1 comprend en outre une unité 28 de génération de textures procédurales. Cette unité 28 de génération de textures procédurales comprend un ou plusieurs microcontrôleurs, ayant des mémoires et programmes adaptés. Il peut s'agir de microcontrôleurs et mémoires dédiés, mais il peut aussi s'agir des mêmes composants que ceux utilisés pour l'unité de traitement 26, utilisés en partage. Comme expliqué ci-dessus, les textures procédurales sont générées à partir de modèles mathématiques et en faisant par exemple appel à des fonctions fractales ou de turbulence.

Pour un exemple d'une unité de génération de textures procédurales, on peut par exemple se référer au document US 6 674 433 ou au document EP 2 599 057. Ces deux documents décrivent comment on peut générer et modéliser un objet texturé dans un espace virtuel, c'est-à-dire sa représentation mathématique. Un logiciel permettant l'édition et la génération de textures procédurales est par exemple commercialisé sous le nom « SUBSTANCE » (marque déposée) par la société Allegorithmic (marque déposée). Dans ces documents, on ne traite que des effets visuels pour le traitement d'objets texturés dans un espace virtuel.

Donc dans la présente invention, l'unité 28 de génération de textures procédurales est configurée pour modéliser un objet texturé et pour afficher une image de l'objet texturé sur l'écran 4. L'objet texturé est donc modélisé dans un espace virtuel.

Par objet texturé, on entend un objet au sens large avec une surface externe présentant des aspects spécifiques. Un objet texturé correspond par exemple à un revêtement de planche de bord, notamment une peau, par exemple du cuir ou encore un bouton de commande.

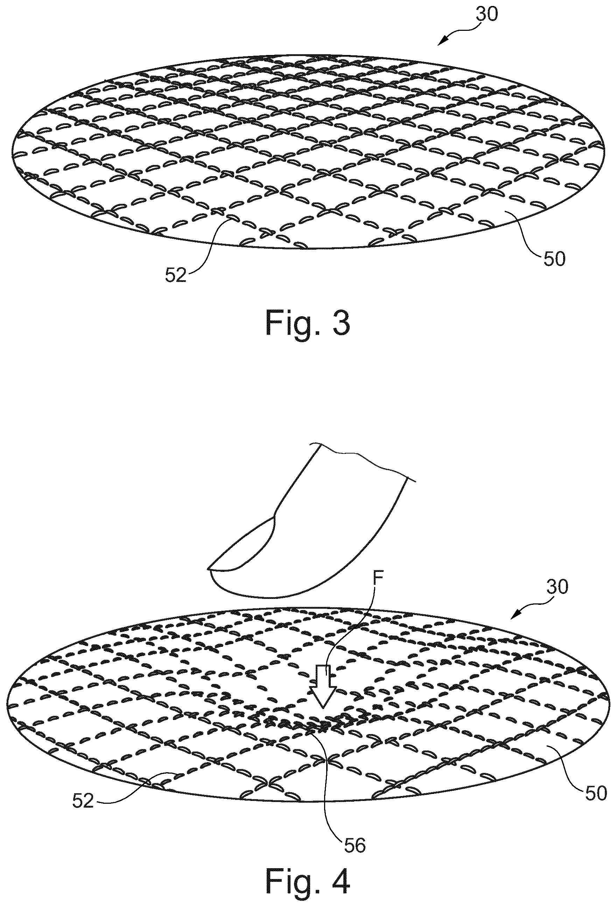

Un exemple d'un objet texturé 30 est montré sur la figure 3. Il s'agit d'une membrane 50 notamment en forme de disque plat, par exemple en cuir et avec des coutures quadrillés 52 du type cuir matelassé.

Dans le monde réel, si on affleure un objet en cuir matelassé, on ressent la rugosité du cuir ainsi que les sillons / rainures formés par les coutures quadrillées 52. On peut aussi enfoncer la membrane 50 en appuyant dessus.

Dans le monde réel, un objet peut être caractérisé par ses aspects de surface, sa rugosité, ses aspérités, sa déformabilité / élasticité en fonction de contraintes externes ou de facteurs environnementaux.

L'unité 28 de génération de textures procédurales permet de représenter dans un espace virtuel (par modélisation) un tel objet réel avec ses caractéristiques.

Une représentation virtuelle correspond à une description mathématique de l'objet texturé 30 avec ses caractéristiques, en particulier en utilisant un maillage adapté par exemple sous forme d'un maillage 3D à polygones comme cela est utilisé dans des jeux vidéo pour obtenir un rendu visuel de surface proche du réel.

L'unité 28 de génération de textures procédurales est également programmée pour pourvoir calculer des modifications sur l'objet texturé 30 en fonction de ses propriétés de déformation par exemple.

Ainsi, comme montré sur la figure 4, une force F appliquée sur la membrane 50 aura pour effet de créer un creux 56 ou renfoncement au centre de la membrane 50.

Comme on le voit sur la figure 2, l'unité 28 de génération de textures procédurales est reliée d'une part au contrôleur 33 du capteur capacitif 31 d'autre part au capteur d'appui 23.

Il reçoit donc en entrée la position en X et Y de l'appui ainsi que la force d'appui appliquée sur la surface tactile 32 par un élément de commande comme par exemple un doigt d'un utilisateur ou un stylet.

Tenant compte de ces données en entrée, l'unité 28 de génération de textures procédurales est programmée pour calculer les modifications sur l'objet texturé 30 dans son espace virtuel, en particulier des changements de forme, comme par exemple représenté sur la figure 4. La force d'appui avec sa localisation sont donc également modélisés et transposés dans l'espace virtuel, c'est-à-dire l'espace mathématique dans lequel est représenté l'objet texturé 30.

L'unité 28 de génération de textures procédurales détermine donc par transposition de la position X, Y d'appui ainsi que de la force d'appui de l'élément de commande dans l'espace virtuel où est modélisé l'objet texturé 30 une interaction de l'objet texturé 30 avec l'élément de commande.

Ensuite, l'unité 28 de génération de textures procédurales commande le dispositif de retour sensitif 20 en fonction de l'effet déterminé de l'interaction sur l'objet texturé 30, ce qui a pour conséquence que l'utilisateur ressent un effet haptique qui ressemble à ce qu'il pourrait ressentir sur un objet réel, alors que son doigt est uniquement posé sur un écran tactile 3 lisse.

Un enfoncement du doigt peut par exemple être simulé par des accélérations asymétriques perpendiculaires à la surface tactile et générées par le dispositif de retour sensitif 20, c'est-à-dire par exemple des cycles d'accélération rapide vers le bas (en référence à la disposition de la figure 2) suivi d'une remontée plus lente. Des effets de bords ou de nervures peuvent être obtenus par des accélérations rapides vers le haut.

Bien entendu, l'unité 28 de génération de textures procédurales affiche aussi sur l'écran 4 l'effet de l'interaction sur l'objet texturé 30, comme par exemple la déformation, par exemple comme sur la figure 4. Une signature acoustique comme retour sonore accompagnant l'effet de l'interaction sur l'objet texturé 30 peut aussi être émise par le haut-parleur 24. Dans le présente exemple, la signature sonore peut être celle d'un doigt qui frotte sur du cuir.

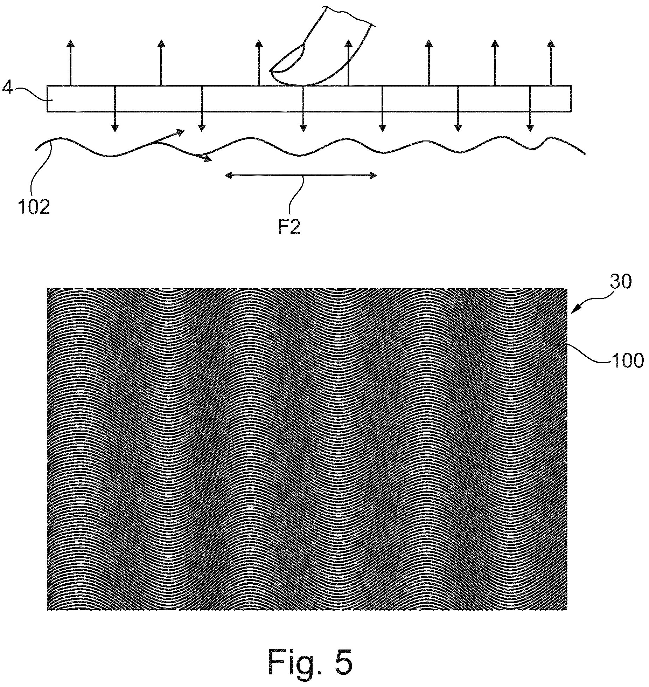

Sur la figure 5 est montré un autre exemple d'un mode de réalisation de l'interface.

Sur cette figure 5, en bas, on a représenté en référence 100 une image d'un objet texturé 30 affichée par l'écran tactile 2.

Dans cet exemple, à la différence de l'exemple des figures 3 et 4, l'objet texturé n'est pas statique au départ, mais il s'agit de reliefs qui se déplacent dans le temps, par exemple selon un mouvement de va et vient comme indiqué par la double flèche F2. L'objet texturé 30 se présente donc sous forme d'une surface dynamique variant dans le temps tel que des vagues qui lorsqu'une force leur est appliquée dessus, s'écrasent du fait d'une certaine élasticité de déformation.

Cet objet texturé 30 est généré à partir d'un modèle mathématique qui est indiqué de façon simplifiée au-dessus de l'image 100 par une courbe 102. Il s'agit par exemple de fonctions sinusoïdales, dont les crêtes se déplacent selon un mouvement de va et vient le long de la surface de l'écran tactile 2.

Lorsque l'on appuie sur la surface tactile 2, l'unité 28 de génération de textures procédurales modifie l'objet texturé 30, ici les vagues, par exemple en les écrasant et les étalant. Cet effet de l'interaction sera visible sur l'écran tactile 2 par l'utilisateur et sera également perceptible par lui étant donné que l'unité 28 va commander le dispositif 20 de retour sensitif en conséquence. En augmentant la force d'appui, l'utilisateur va percevoir un plus grand étalement / aplatissement des vagues.

On peut aussi faire une autre exploitation de l'image de l'objet texturé de la figure 5. Supposons que l'objet texturé de l'image 100 est fixe au départ et plat, par exemple comme un plan d'eau.

En appuyant sur l'écran tactile 2, on génère un creux et des vagues à l'endroit où le doigt est posé sur la surface et, lorsque le doigt se déplace, les vagues se déplacent avec le doigt, le point d'appui correspondant toujours à un creux.

Dans ce cas aussi, c'est l'unité 28 de génération de textures procédurales qui va d'abord générer les déformations de l'objet texturé dans l'espace virtuel pour ensuite commander le dispositif de retour sensitif 20 d'une part et l'écran tactile 2 pour l'affichage de la déformation de l'objet texturé 30 d'autre part.

De façon générale, on peut observer encore d'autres cas. En fonction de la pression exercée (P=F/S) et suivant la rigidité simulée de la texture (par exemple du plastique ou du métal) et selon l'état de surface de l'objet texturé, par exemple un gros grain de surface très solide, de rugosité importante, la surface est censée de se déformer sous l'effort de l'appui mais pas le grain de surface qui lui reste par exemple constant.

Dans ce cas, l'unité 28 de génération de textures procédurales peut tenir compte dans l'espace virtuel que la surface de l'objet texturé, par exemple une plaque avec des bosses se déforme, mais pas les bosses elles-mêmes.

L'effet de l'interaction de l'objet texturé 30 dans l'espace virtuel pourra par exemple tenir compte de l'angle tangent de la surface déformée au contact, du coefficient de frottement moyen statique et dynamique du doigt sur la surface en fonction du matériau simulé, ou encore de la vitesse de déplacement du doigt sur la surface tactile.

Selon un autre cas, comme expliqué en regard des figures 3 et 4, l'unité 28 de génération de textures procédurales peut prendre en compte que le grain de texture (par exemple des bosses) évolue en fonction de la pression.

Dans ce cas, l'unité 28 de génération de textures procédurales tient compte d'une déformation macroscopique (déformation de la surface) et d'une déformation microscopique (déformation des bosses) en fonction de la pression appliquée.

L'objet texturé 30 peut aussi par exemple représenter un bouton de commande, une touche de clavier ou un curseur de défilement (ou « slider » en anglais).

Dans ce cas par exemple, l'unité 28 de génération de textures procédurales peut par exemple simuler l'enfoncement du bouton en fonction d'une pression exercée sur la surface tactile 3 et commander le dispositif de retour sensitif 20 de sorte que l'utilisateur ressente l'enfoncement du doigt d'une part et entende par exemple un cliquetis d'interrupteur mécanique.

On comprend donc que l'interface selon l'invention permet d'élargir considérablement le champ d'application des écrans tactiles à retour haptique 4.

## Revendications

1. Procédé de génération d'un retour sensitif pour une interface (1) de véhicule automobile comprenant :
- un écran (4) configuré pour afficher une image,
- une surface tactile (3) disposée au-dessus de l'écran (4) et configurée pour localiser la position (X, Y) ainsi que pour déterminer une force d'appui d'un élément de commande sur la surface tactile (3),
- un dispositif de retour sensitif (20) configuré pour générer un retour sensitif lors d'une réception d'un signal de commande, et
- une unité (28) de génération de textures procédurales configurée pour modéliser un objet texturé (30) et pour afficher une image de l'objet texturé (30) sur l'écran (4),
- on affiche l'image de l' objet texturé (30) générée par l'unité (28) de génération de textures procédurales sur l'écran (4),
**caractérisé en ce que**
- en tenant compte de la localisation sur la surface tactile (3) et de la force d'appui (F) de l'élément de commande, on modélise une interaction de cet élément de commande avec l'objet texturé (30),
- on détermine l'effet de l'interaction sur l'objet texturé (30),
- on commande le dispositif de retour sensitif (20) en fonction de l'effet déterminé de l'interaction sur l'objet texturé (30), dans lequel on affiche sur l'écran (4) l'effet de l'interaction sur l'objet texturé et dans lequel l'unité (28) de génération de textures procédurales tient compte lors de la modélisation de l'objet texturé (30) d'au moins un des paramètres suivants compris dans le groupe de paramètres: rugosité de l'objet texturé, déformabilité du matériau de l'objet texturé, élasticité de l'objet texturé, le déplacement ou le mouvement de l'objet texturé.

2. Procédé selon la revendication 1, dans lequel l'objet texturé (30) correspond à un revêtement de planche de bord, notamment une peau, par exemple du cuir ou un bouton de commande.

3. Procédé selon la revendication 1 à 2, dans lequel l'objet texturé (30) présente une surface dynamique variant dans le temps, notamment sous forme de vagues.

4. Procédé selon l'une quelconque des revendications 1 à 3, dans lequel on émet un retour sonore accompagnant l'effet de l'interaction sur l'objet texturé (30).

5. Procédé selon l'une quelconque des revendications 1 à 4, dans lequel l'objet texturé (30) est représenté sous forme d'un maillage 3D à polygones.

6. Interface de véhicule automobile comprenant :
- une unité (28) de génération de textures procédurales configurée pour modéliser un objet texturé (30) et pour afficher une image de l'objet texturé (30),
- un écran (4) configuré pour afficher l'image de l' objet texturé (30) générée par ladite unité (28) de génération de textures procédurales,
- une surface tactile (3) disposée au-dessus de l'écran (4) et configurée pour localiser la position (X, Y) ainsi que déterminer une force d'appui (F) d'un élément de commande sur la surface tactile (3), et
- un dispositif de retour sensitif (20) configuré pour générer un retour sensitif lors d'une réception d'un signal de commande,
**caractérisé en ce que** l'unité (28) de génération de textures procédurales est configurée
- pour modéliser une interaction de l'élément de commande avec l'objet texturé (30) en tenant compte de la localisation sur la surface tactile (3) et de la force d'appui (F) de l'élément de commande,
- pour déterminer l'effet de l'interaction sur l'objet texturé (30), et
- pour commander le dispositif de retour sensitif (20) en fonction de l'effet déterminé de l'interaction sur l'objet texturé (30), et l'unité (28) de génération de textures procédurales est configurée pour afficher sur l'écran (4) l'effet de l'interaction sur l'objet texturé et pour tenir compte lors de la modélisation de l'objet texturé (30) d'au moins un des paramètres suivants compris dans le groupe de paramètres : rugosité de l'objet texturé, déformabilité du matériau de l'objet texturé, élasticité de l'objet texturé, le déplacement ou le mouvement de l'objet texturé.

7. Interface selon la revendication 6, dans laquelle l'objet texturé (30) correspond à un revêtement de planche de bord, notamment une peau, par exemple du cuir ou un bouton de commande.

8. Interface selon l'une quelconque des revendications 6 à 7, dans laquelle elle comprend en outre un émetteur acoustique (24) configuré pour émettre une signature acoustique accompagnant l'effet de l'interaction sur l'objet texturé (30).

9. Interface selon l'une quelconque des revendications 6 à 8, dans laquelle l'objet texturé (30) dans l'espace virtuel est représenté sous forme d'un maillage 3D à polygones.

## Patentansprüche

1. Verfahren zum Erzeugen einer sensorische Rückmeldung für eine Kraftfahrzeugschnittstelle (1), umfassend:
- einen Bildschirm (4), der zur Anzeige eines Bildes konfiguriert ist,
- eine über dem Bildschirm (4) angeordnete Oberfläche (3), die so konfiguriert ist, dass sie die Position (X, Y) sowie eine Druckkraft eines Bedienelements auf der Oberfläche (3) lokalisiert,
- eine sensorische Rückmeldungsvorrichtung (20), die zum Erzeugen einer sensorischen Rückmeldung bei Empfang eines Steuersignals konfiguriert ist, und
- eine prozedurale Texturerzeugungseinheit (28), die zum Modellieren eines texturierten Objekts (30) und zum Anzeigen eines Bildes des texturierten Objekts (30) auf dem Bildschirm (4) konfiguriert ist,
- das von der prozeduralen Texturerzeugungseinheit (28) erzeugte Bild des texturierten Objekts (30) wird auf dem Bildschirm (4) angezeigt,
**dadurch gekennzeichnet, dass**
- unter Berücksichtigung der Position auf der berührungsempfindlichen Oberfläche (3) und der Druckkraft (F) des Bedienelements eine Interaktion dieses Bedienelements mit dem texturierten Objekt (30) modelliert wird,
- die Auswirkung der Interaktion auf das texturierte Objekt (30) bestimmt wird,
- die Rückmeldungsvorrichtung (20) in Abhängigkeit von der ermittelten Auswirkung der Interaktion auf das texturierte Objekt (30) gesteuert wird, wobei die Auswirkung der Wechselwirkung auf das texturierte Objekt auf dem Bildschirm (4) angezeigt wird und wobei die Einheit (28) zur Erzeugung prozeduraler Strukturen bei der Modellierung des texturierten Objekts (30) mindestens einen der folgenden Parameter berücksichtigt, die in der Parametergruppe enthalten sind: Rauheit des texturierten Objekts, Verformbarkeit des Materials des texturierten Objekts, Elastizität des texturierten Objekts, Verschiebung oder Bewegung des texturierten Objekts.

2. Verfahren nach Anspruch 1, wobei das texturierte Objekt (30) einer Armaturenbrettverkleidung, insbesondere einer Haut, beispielsweise aus Leder, oder einem Bedienknopf entspricht.

3. Verfahren nach Anspruch 1 bis 2, wobei das texturierte Objekt (30) eine zeitlich variierende dynamische Oberfläche aufweist, insbesondere in Form von Wellen.

4. Verfahren nach einem der Ansprüche 1 bis 3, wobei ein akustisches Feedback erzeugt wird, das den Effekt der Interaktion auf das texturierte Objekt (30) begleitet.

5. Verfahren nach einem der Ansprüche 1 bis 4, wobei das texturierte Objekt (30) in Form eines 3D-Polygonnetzes dargestellt ist.

6. Kraftfahrzeugschnittstelle, umfassend:
- eine Einheit (28) zur Erzeugung prozeduraler Texturen, die so konfiguriert ist, dass sie ein texturiertes Objekt (30) modelliert und ein Bild des texturierten Objekts (30) anzeigt,
- einen Bildschirm (4), der so konfiguriert ist, dass er das von der Einheit (28) zur Erzeugung prozeduraler Texturen erzeugte Bild des texturierten Objekts (30) anzeigt,
- eine über dem Bildschirm (4) angeordnete Oberfläche (3), die dazu konfiguriert ist, die Position (X, Y) sowie eine Druckkraft (F) eines Bedienelements auf der Oberfläche (3) zu lokalisieren, und
- eine Rückmeldungsvorrichtung (20), die so konfiguriert ist, dass sie bei Empfang eines Steuersignals eine Rückmeldung erzeugt, **dadurch gekennzeichnet, dass** die Einheit (28) zur Erzeugung prozeduraler Texturen so konfiguriert ist
- um eine Interaktion des Bedienelements mit dem texturierten Objekt (30) unter Berücksichtigung der Lage auf der taktilen Oberfläche (3) und der Druckkraft (F) des Bedienelements zu modellieren,
- um die Auswirkung der Interaktion auf das texturierte Objekt (30) zu bestimmen, und
- um die sensorische Rückmeldungsvorrichtung (20) in Abhängigkeit von der ermittelten Auswirkung der Interaktion auf das texturierte Objekt (30) zu steuern, und die Einheit (28) zur Erzeugung prozeduraler Texturen ist so konfiguriert, dass sie die Auswirkung der Interaktion auf das texturierte Objekt auf dem Bildschirm (4) anzeigt und bei der Modellierung des texturierten Objekts (30) mindestens einen der folgenden Parameter berücksichtigt, die in der Parametergruppe enthalten sind: Rauheit des texturierten Objekts, Verformbarkeit des Materials des texturierten Objekts, Elastizität des texturierten Objekts, Verschiebung oder Bewegung des texturierten Objekts.

7. Schnittstelle nach Anspruch 6, wobei das texturierte Objekt (30) einer Armaturenbrettverkleidung, insbesondere einer Haut, beispielsweise aus Leder oder einem Bedienknopf, entspricht.

8. Schnittstelle nach einem der Ansprüche 6 bis 7, wobei sie zusätzlich einen akustischen Sender (24) umfasst, der so konfiguriert ist, dass er eine akustische Signatur aussendet, die den Effekt der Interaktion auf das texturierte Objekt (30) begleitet.

9. Schnittstelle nach einem der Ansprüche 6 bis 8, wobei das texturierte Objekt (30) im virtuellen Raum als 3D-Polygonnetz dargestellt ist.

## Claims

1. A method of generating sensory feedback for a motor vehicle interface (1) comprising :
- a screen (4) configured to display an image,
- a tactile surface (3) arranged above the screen (4) and configured to locate the position (X, Y) and to determine a pressure force of a control element on the tactile surface (3),
- a sensory feedback device (20) configured to generate sensory feedback when a control signal is received, and
- a procedural texture generation unit (28) configured to model a textured object (30) and to display an image of the textured object (30) on the screen (4),
- displaying the image of the textured object (30) generated by the procedural texture generation unit (28) on the screen (4),
**characterized in that**
- by taking into account the location on the tactile surface (3) and the pressure force (F) of the control element, an interaction of this control element with the textured object (30) is modelled,
- the effect of the interaction on the textured object (30) is determined,
- the sensory feedback device (20) is controlled as a function of the determined effect of the interaction on the textured object (30), wherein the effect of the interaction on the textured object is displayed on the screen (4) and wherein the procedural texture generation unit (28) takes into account at least one of the following parameters from the parameter group when modeling the textured object (30): roughness of the textured object, deformability of the material of the textured object, elasticity of the textured object, displacement or movement of the textured object.

2. Method according to claim 1, wherein the textured object (30) corresponds to a dashboard covering, in particular a skin, for example leather or a control knob.

3. Method according to claims 1 to 2, in which the textured object (30) has a dynamic surface that varies over time, in particular in the form of waves.

4. Method according to any one of claims 1 to 3, in which sound feedback is emitted to accompany the effect of the interaction on the textured object (30).

5. Method according to any one of claims 1 to 4, in which the textured object (30) is represented in the form of a 3D polygon mesh.

6. A motor vehicle interface comprising :
- a procedural texture generation unit (28) configured to model a textured object (30) and to display an image of the textured object (30),
- a screen (4) configured to display the image of the textured object (30) generated by said procedural texture generation unit (28),
- a tactile surface (3) arranged above the screen (4) and configured to locate the position (X, Y) as well as to determine a pressure force (F) of a control element on the tactile surface (3), and
- a sensory feedback device (20) configured to generate sensory feedback on receipt of a control signal,
**characterized in that** the procedural texture generation unit (28) is configured
- to model an interaction of the control element with the textured object (30), taking into account the location on the tactile surface (3) and the pressure force (F) of the control element,
- to determine the effect of the interaction on the textured object (30), and
- to control the sensory feedback device (20) as a function of the determined effect of the interaction on the textured object (30), and the procedural texture generation unit (28) is configured to display on the screen (4) the effect of the interaction on the textured object and to take into account when modeling the textured object (30) at least one of the following parameters from the group of parameters : roughness of the textured object, deformability of the material of the textured object, elasticity of the textured object, displacement or movement of the textured object.

7. Interface according to claim 6, wherein the textured object (30) corresponds to a dashboard t covering, in particular a skin, for example leather or a control knob.

8. Interface according to any one of claims 6 to 7, wherein it further comprises an acoustic transmitter (24) configured to emit an acoustic signature accompanying the effect of the interaction on the textured object (30).

9. An interface according to any one of claims 6 to 8, in which the textured object (30) in virtual space is represented in the form of a 3D polygon mesh.
